# EUROPEAN PATENT APPLICATION

(11) **EP 1 441 490 A1**
(43) Date of publication of application: **28.07.2004**
(21) Application number: 02775448.0
(22) Date of filing: 31.10.2002
(51) Int. Cl.: H04M 1/17, H04M 1/02

(54) **ACCESSORY OF PORTABLE TERMINAL AND PORTABLE TERMINAL**

(30) Priority: 02.11.2001 JP 2001338360
(71) Applicant: MATSUSHITA ELECTRIC INDUSTRIAL CO., LTD, Kadoma-shi, Osaka 571-0000 (JP)
(72) Inventor: OKADA, Norio, Yokohama-shi, Kanagawa 240-0042 (JP); IIJIMA, Takahiro, Setagaya-ku, Tokyo 158-0084 (JP); IWATA, Yo, Yokohama-shi, Kanagawa 223-0053 (JP)
(74) Representative: Leeming, John Gerard
(86) International application number: PCT/JP2002/011363
(87) International publication number: WO 2003/039111

(57) **Abstract**

The invention discloses a portable terminal accessory having functions other than decoration and a portable terminal comprising such an accessory. By installing a detachable transparent accessory (14) to part of a portable terminal casing (10), information described on a sheet (12) sandwiched between the accessory and the casing can be viewed through the accessory from the outside. By impregnating an aromatic substance in the sheet and providing air holes (16) for the accessory, a perfume is effectively exhaled. The accessory can be installed as rotatable in relation to the casing instead of as detachable. In this case, the accessory functions as a stand for the portable terminal. The accessory can be provided with additional functions, for example, mounting an IC chip, providing a lens function etc.

## Description

### TECHNICAL FIELD

The present invention relates to an accessory of a portable terminal as typified by a mobile communication device, a portable phone, and a car phone and a portable terminal, and more particularly, to decoration of the portable terminal.

### BACKGROUND ART

As a portable communication terminal (hereinafter simply referred to as portable terminal) such as a portable phone and a PHS (Personal Handyphone System) becomes popular, its appearance has been emphasized. There have ever been widely used portable terminals, wherein users can select colors and gloss of the casing to taste. Lately, a portable terminal, wherein decoration is provided by applying a colorful sheet to part of a casing; a portable terminal, wherein a top side and a back side of a casing can be replaced with other colors or designs to taste; and a cover which covers part of a top side and a back side of a casing are in practical use. One of such conventional examples is described in Registered Utility Model Publication No. 3054414.

By using the conventional decoration methods, it is possible to provide decoration for casings of portable terminals. However, the function is limited only to the decoration. For example, other functions, such as a visual transmission function e.g. advertisement and information distribution, and an olfactory transmission function e.g. transmitting a given scent cannot be provided together.

### DISCLOSURE OF THE INVENTION

Therefore, it is an object of the invention to provide a portable terminal accessory which has functions other than decoration, and a portable terminal comprising such an accessory.

In order to attain the foregoing object, in the invention, by installing a detachable transparent accessory to part of a portable terminal casing, information descried on a sheet sandwiched between the accessory and the casing can be viewed through the accessory from the outside.

That is, according to the invention, a portable terminal accessory, wherein in a portable terminal accessory which covers part of a portable terminal casing and provides decoration to the casing, the accessory is transparent so that information described on a sheet sandwiched between the accessory and the casing can be viewed through the accessory from the outside, and the accessory is detachable in relation to the portable terminal casing so that the sheet can be replaced with other sheet is provided.

By this construction, it becomes possible that not only decoration is provided by the accessory, but also information described on the sheet sandwiched between the accessory and the casing can be viewed through the transparent accessory from the outside, and various information can be given to users.

Further, according to the invention, a portable terminal, comprising a casing of a portable terminal body, a detachable transparent accessory installed to part of the casing, and a sheet, which is sandwiched between the casing and the accessory and includes given information is provided.

By this construction, it becomes possible that not only decoration is provided by the accessory, but also information described on the sheet sandwiched between the accessory and the casing can be viewed through the transparent accessory from the outside, and various information can be given to users.

Further, according to the invention, a portable terminal, comprising a casing of a portable terminal body, a rotatable transparent accessory installed to part of the casing, and a sheet, which is sandwiched between the casing and the accessory and includes given information is provided.

By this construction, it becomes possible that not only decoration is provided by the accessory, but also information described on the sheet sandwiched between the accessory and the casing can be viewed through the transparent accessory from the outside, and various information can be given to users.

### BRIEF DESCRIPTION OF THE DRAWINGS

FIG. 1 is an exploded view, which shows an embodiment of a portable terminal accessory and a portable terminal to which this portable terminal accessory is installed according to the invention;
FIG. 2 is a view, which shows a state of assembling the disassembled parts in FIG. 1;
FIG. 3 is a view, which shows a portable terminal accessory comprising air holes as a modified example of the embodiment of FIGS. 1 and 2; and
FIG. 4 is an exploded view, which shows other embodiment of a portable terminal accessory and a portable terminal to which this portable terminal accessory is installed according to the invention.

### BEST MODE FOR CARRYING OUT THE INVENTION

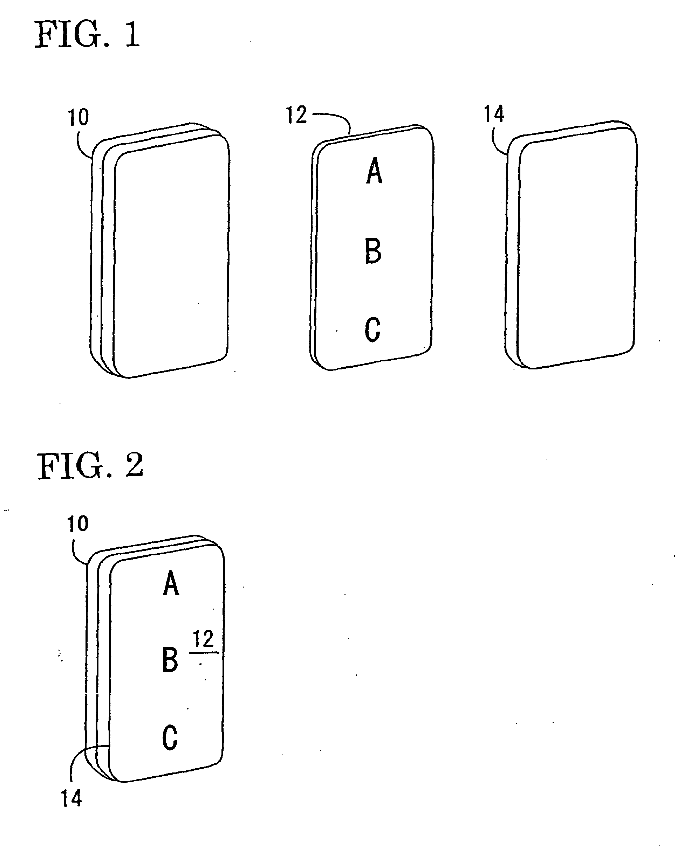

Descriptions will be given hereinbelow of preferred embodiments of the invention with reference to the drawings. FIG. 1 is an exploded view, which shows a portable terminal accessory and a portable terminal to which this portable terminal accessory is installed according to the invention. FIG. 2 is a view, which shows a state of assembling the disassembled parts in FIG. 1. A detachable transparent portable terminal accessory 14 is installed to a back side of a portable terminal casing 10. FIG. 1 is an exploded view, and FIG. 2 shows a state wherein the portable terminal accessory 14 is installed to the casing 10. A sheet 12 is sandwiched between the casing 10 and the portable terminal accessory 14. By printing various information on the sheet 12, this information can be read through the transparent portable terminal accessory 14 from the outside.

Further, by impregnating an aromatic substance, i.e. a perfume in this sheet, and providing air holes for the portable terminal accessory 14 in order to exhale scent of the perfume, it becomes possible to provide scent to users' taste. That is, it is also possible to change the sheet 12 so that users can select a scent to taste depending on their mood of each day by preparing several sheets 12 in which several perfumes are respectively impregnated.

The portable terminal accessory 14 can be either clear and colorless or clear and appropriately colored. In order to enable the portable terminal accessory 14 to be detachable, groove parts are provided at a peripheral part of the portable terminal casing 10. Meanwhile, convex parts to engage with the grooves of the casing 10 are provided at a periphery of the portable terminal accessory 14. Further, as necessary, claws and/or concave parts to engage with the claws can be provided for the casing 10 and/or the portable terminal accessory 14.

Necessary character information and/or image information etc. can be given to the sheet 12. Specifically, the sheet 12 can be used as an identification, or a barcode can be printed on the sheet 12. Further, various arrangements can be made to the portable terminal accessory 14 itself. For example, a barcode can be printed on the portable terminal accessory 14, an IC chip can be mounted in the portable terminal accessory 14, or a lens function or a polarization function can be provided for a member to make the portable terminal accessory 14. These barcode and IC chip can be used for personal identification etc. When the accessory 14 has the lens function, it is possible to remove the accessory 14 to use it as a magnifying glass etc. if a user needs a magnifying glass or glasses away from home. Similarly, when the accessory 14 has the polarization function, the accessory 14 can function as a polaroid sunglass to reduce glare due to diffused reflection of light on the water etc.

In the example of FIGS. 1 and 2, the detachable portable terminal accessory 14 is installed to the casing 10. However, there is other example, wherein a rotatable end of the portable terminal accessory 14 is installed to the casing 10. In this case, the portable terminal accessory 14 cannot be replaced or is hard to be replaced. However, in this case, the portable terminal accessory 14 has no risk to be lost. In addition, when rotating the portable terminal accessory 14 and fixing it at a given angle in relation to the casing 10, it functions as a stand for the portable terminal 10.

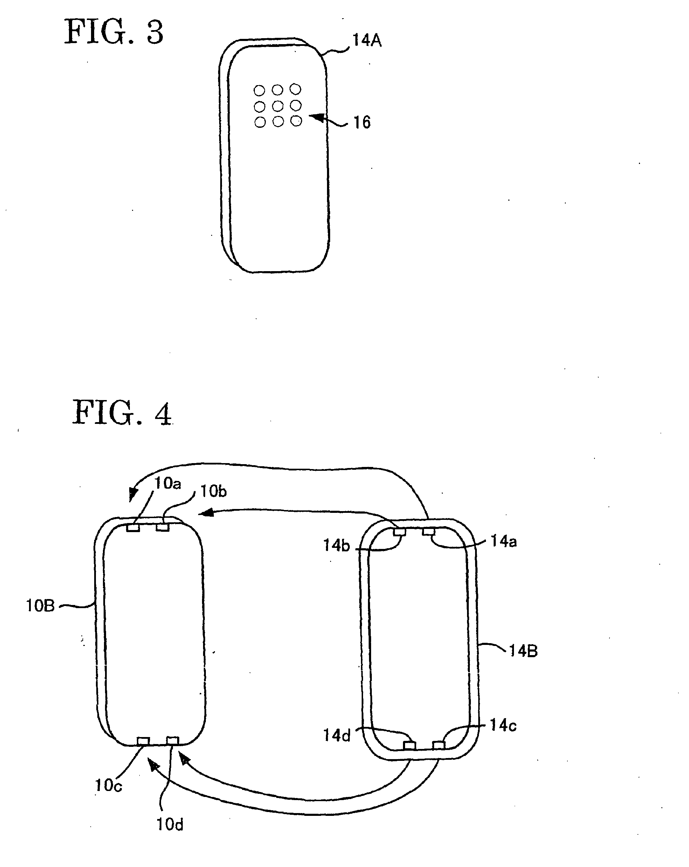

FIG. 3 is a view, which shows an example, wherein air holes 16 are provided for a portable terminal accessory 14A. That is, in this case, when using the sheet 12 shown in FIG. 1 in which an aromatic substance is impregnated as mentioned above, the aromatic substance is effectively exhaled outside via the air holes 16 of the portable terminal accessory 14A, so that the aromatic substance can be used as a perfume or a cologne.

FIG. 4 is a pattern diagram, which shows other embodiment of the invention. Concave parts 10a, 10b, 10c, and 10d are provided at an upper end and a lower end of a casing 10B. Meanwhile, convex parts 14a, 14b, 14c and 14d capable of engaging with the concave parts 10a, 10b, 10c, and 10d of the casing 10 are provided inside an upper end and a lower end of a portable terminal accessory 14B. In this embodiment, the portable terminal accessory 14 is made of a relatively soft synthetic resin, polyethylene, and is easily deformed elastically. Therefore, when the convex parts 14a, 14b, 14c and 14d engage with the concave parts 10a, 10b, 10c, and 10d of the casing 10, elastic deformation arises. After the engagement, the engagement cannot be released unless an external force is rather applied. Therefore, the portable terminal accessory 14B is not easily removed from the casing 10B.

In the foregoing embodiments, descriptions have been given of the case of a so-called non-folding portable terminal as an example. However, the invention can be applied not only to this case, but also to portable terminals including a portable phone and a PHS in any shape including a folding type.

### INDUSTRIAL APPLICABILITY

As described above, according to the invention, by installing a detachable transparent accessory to part of a portable terminal casing, information described on a sheet sandwiched between the accessory and the casing can be viewed through the accessory from the outside. Therefore, it is possible to provide a portable terminal accessory having other functions, for example, a visual transmission function e.g. advertisement and information distribution, and an olfactory transmission function e.g. transmitting a given scent other than decoration, and a portable terminal comprising such an accessory. Further, by impregnating an aromatic substance in the sheet, and providing air holes for the accessory, a perfume can be effectively exhaled. Further, the accessory can be installed not as detachable, but as rotatable in relation to the casing. In this case, the accessory functions as a stand for the portable terminal. Furthermore, additional functions can be provided for the accessory, for example, mounting an IC chip, providing a lens function etc.

## Claims

1. A portable terminal accessory, wherein in a portable terminal accessory which covers part of a portable terminal casing and provides decoration to the casing, the accessory is transparent so that information described on a sheet sandwiched between the accessory and the casing can be viewed through the accessory from the outside, and the accessory is detachable in relation to the portable terminal casing so that the sheet can be replaced with other sheet.

2. The portable terminal accessory according to claim 1, wherein air holes are provided in order to exhale scent of a perfume impregnated in the sheet through the accessory to the outside.

3. The portable terminal accessory according to claim 1, wherein the accessory is provided with a color similar to of the portable terminal casing.

4. A portable terminal, comprising:
a casing of a portable terminal body,
a detachable transparent accessory installed to part of the casing, and
a sheet, which is sandwiched between the casing and the accessory, and includes given information.

5. A portable terminal, comprising:
a casing of a portable terminal body,
a rotatable transparent accessory installed to part of the casing, and
a sheet, which is sandwiched between the casing and the accessory, and includes given information.

6. The portable terminal according to claim 4 or claim 5, wherein air holes are provided in order to exhale scent of a perfume impregnated in the sheet through the accessory to the outside.

7. The portable terminal according to claim 4 or claim 5, wherein the accessory is provided with a color similar to of the portable terminal casing.
